# EUROPÄISCHE PATENTSCHRIFT

(11) **EP 1 788 244 B1**
(45) Veröffentlichungstag und Bekanntmachung des Hinweises auf die Patenterteilung: **16.02.2011**
(21) Anmeldenummer: 06124385.3
(22) Anmeldetag: 20.11.2006
(51) Int. Cl.: F04B 1/04, F04B 9/02

(54) **Radialkolbenpumpe**
Radial piston pump
Pompe à pistons radiaux

(30) Priorität: 21.11.2005 DE 102005055779; 08.03.2006 DE 102006010680; 21.11.2005 DE 102005055778
(43) Veröffentlichungstag der Anmeldung: 23.05.2007
(73) Patentinhaber: Continental Teves AG & Co. oHG, 60488 Frankfurt am Main (DE)
(72) Erfinder: WAGNER, Christoph, 61231, Bad Neuheim (DE); MARTIN, Sven, 68723, Schwetzingen (DE); BARTSCH, Thomas, 65527, Niedernhausen (DE)
(74) Vertreter: Neumann, Stephan

(56) Entgegenhaltungen:
- DE-A1- 19 650 274
- DE-A1- 19 800 747
- DE-A1- 19 830 890
- DE-A1- 19 844 203
- DE-A1-102004 005 204
- US-A- 5 348 382

## Beschreibung

Die Erfindung betrifft eine Radialkolbenpumpe nach dem Oberbegriff des Patentanspruchs 1.

Prinzipiell sind zwei oder mehr Kolben für zwei oder mehr Förderkreise einer Kraftfahrzeugbremsanlage vorgesehen, wobei die Kolben gegenläufige Arbeitstakte ausführen, so dass jeweils einer der Kolben einen Ansaugtakt ausübt, während sich ein anderer Kolben im Verdrängungstakt befindet. Weil beide Kolben mit einem Kolbenboden gewissermaßen gemeinsam auf einem Außenring eines Wälzlagers abgestützt sind, rollt das Wälzlager grundsätzlich unter dem Kolbenboden desjenigen Kolbens ab, welcher die größeren Radialkräfte auf den Kurbeltrieb ausübt. Unter der Wirkung der Exzenterrotation findet dagegen am anderen Kolbenboden ein, zumindest geringer, Reibvorgang statt, was nicht weiter schadet, weil die vorliegenden Normalkräfte weitgehend vernachlässigbar sind. Jedoch bewirken die Reibkräfte Querkräfte, was die Kolbenführungen und Dichtmittel beansprucht. Diesbezüglich wurde gemäß der DE 43 10 062 C2 mit Hilfe einer sogenannten Deaxierung eine Verbesserung zur Reduktion des Führungsverschleiß vorgeschlagen.

Erweiterte elektronische Fahrerunterstützungsmaßnahmen führen nun zu Lastfällen, die es ermöglichen, dass Pumpenkolben von zwei oder mehr Förderkreisen mehr oder weniger gleichzeitig unter einer hohen Vordruckbeanspruchung stehen. Als Beispiel seien Einbremsvorgänge bei laufender Pumpe genannt, bei denen von außen ein hohes Druckniveau aufgebaut wird. Durch mehrseitige Einspannung oder Einklemmung des Exzenterlagers treten überlagerte Abgleit-, Reibungs- sowie Abrollvorgänge an Berührstellen auf, welche zu einer verstärkten Beanspruchung des gesamten Kurbeltriebs führen. Erhöhtes Spiel der Kolben in Kolbenführungen, erhöhter Verschleiß von Dichtungen, Führungsbändern sowie Lagern, und eine erhöhte Leckagequote oder sogar das Ansaugen von Luft ins Bremssystem, können exemplarisch als Verschleißfolge genannt werden. Andererseits soll die Laufdauer der Kolbenpumpe, sowie deren Verschleißreserve suzessive erhöht werden.

Eine Radialkolbenpumpe ist aus der DE 43 10 062 C2 bekannt. Dabei weisen die radial zum Exzenter ausgerichteten Kolben einen Achsversatz zur Drehachse des Exzenters auf. Der Achsversatz ist in Bezug auf die Drehrichtung so arrangiert, dass der Betrag einer Reibkraft zwischen Kolbenboden und Exzenterlager gezielt ausgenutzt wird, um auf den Kolben einwirkende Kippmomente zu reduzieren. Mit anderen Worten ermöglicht die Reibkraft zwischen Kolbenboden und Exzenterlager ein, den Kippmomenten entgegenwirkendes, Gegendrehmoment. In der Folge wird ein reduzierter Verschleiß der Kolbenführung im Gehäuse, wie auch ein reduzierter Verschleiß der Kolbenwandung erzielt. Eine Verschleißminderung bei mehrseitig eingespanntem oder eingeklemmtem Exzenterlager ermöglicht dieser Vorschlag nicht.

Der DE 10 2004 018 163 A1 ist eine Radialkolbenpumpe für ein Kraftfahrzeugeinspritzsystem mit mehreren Kolben zu entnehmen, die in einem Gehäuse verschiebbar geführt angeordnet sind, und wobei die Kolben mittels Gleitlagerung anhand Gleitschuhe unter Zwischenordnung von einem drehfesten Gleitring auf einem rotierenden Exzenter abgestützt sind. Um die Reibung zwischen Gleitschuh und Gleitring zu beeinflussen, wird vorgeschlagen, in Abflachungen des Gleitrings und/oder in den jeweiligen Gleitflächen des Gleitschuhs Schmiertaschen auszubilden.

Nach der DE 103 47 190 A1 wird für ein elektronisch geregeltes Bremssystem zwecks Querkraftentkopplung von einem Kurbeltrieb ohne Exzenterlager vorgeschlagen, zwischen Kolbenboden und Exzenter ein Zwischenelement anzuordnen, wobei das Zwischenelement mit einem Pumpengehäuse verbunden ist, um Querkräfte infolge Gleitreibung, ohne Beanspruchung der Kolben, unmittelbar in das Pumpengehäuse einzuleiten.

Aus der gattungsgemäßen DE 10 2004 005 204 A1 ist eine Radialkolbenpumpe bekannt, die zwischen einem Kolbenboden und einem zum Antrieb eines Kolbens vorgesehenen Exzenter innerhalb eines flexiblen Wälzlagerkäfigs relativ zueinander verschiebbare Wälzlagermittel aufweist.

Die Erfindung beruht auf der Aufgabe, einen Kurbeltrieb vorzuschlagen, welcher Vordruckbeanspruchung toleriert.

Die Aufgabe wird für eine gattungsgemäße Radialkolbenpumpe mit den kennzeichnenden Merkmalen des Patentanspruchs 1 gelöst.

Weitere vorteilhafte Ausführungsformen der Erfindung betreffen vorteilhafte Gestaltungen zur Verbesserung von Packaging, also zwecks Verringerung der Baugröße sowie zur Bildung einer möglichst einfachen, kostenneutralen Baueinheit, welche sich einfach in ein gegebenes Gehäuse bei gegebener Verbohrung integrieren lässt. Zusätzliche Merkmale und Einzelheiten gehen aus Unteransprüchen im Zusammenhang mit der Beschreibung und der Zeichnung hervor. In der Zeichnung sind übereinstimmende Merkmale mit übereinstimmenden Bezugsziffern versehen. Zur Unterscheidung mehrfach vorgesehener Bezugsziffern wird teilweise ein Strich verwendet. In der Zeichnung zeigt:
Fig. 1 teilweise einen Kurbeltrieb eines elektrohydraulischen Aggregates in größerem Maßstab sowie im Querschnitt,
Fig. 2 eine abgewandelte Ausführungsform eines Kurbeltriebs ähnlich Fig. 1 jedoch im Längsschnitt,
Fig. 3 + 4 eine dritte Variante vergrößert in Quer- sowie Längsschnitt, wie in den Fig. 1 und 2, und
Fig. 5 + 6 eine vierte Variante von einem Kurbeltrieb mit einem Exzenterlager im Schnitt.

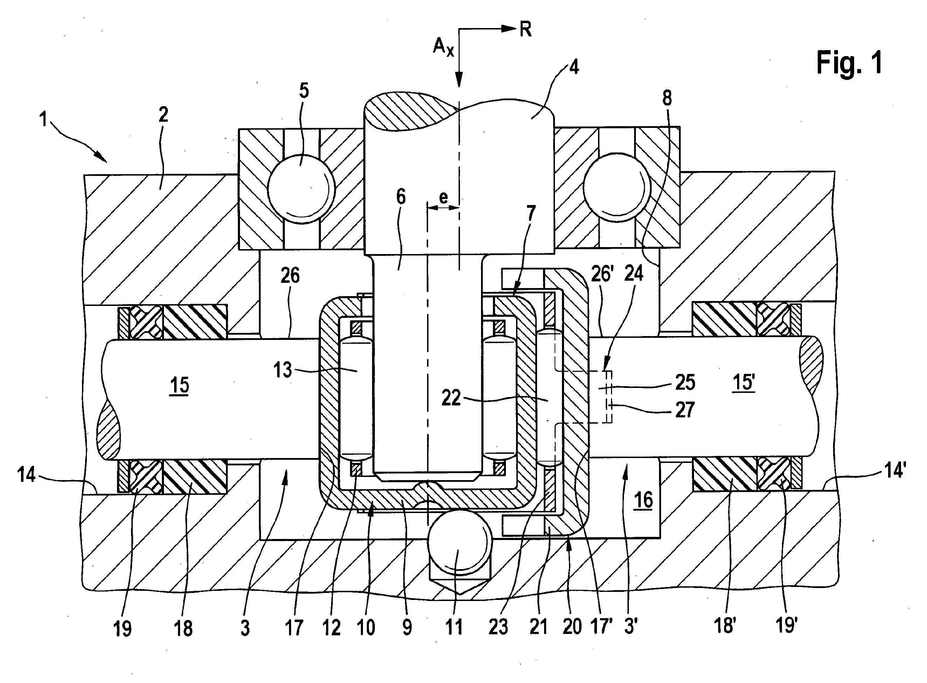

Die Fig. 1 zeigt einen stark vergrößerten Schnitt durch einen Auschnitt eines elektrohydraulischen Aggregates 1 für ein Kraftfahrzeug. Das Aggregat 1 umfasst einen nicht gezeichneten Elektromotor, welcher an einem teilweise verdeutlichten Gehäuse 2 zur Aufnahme von Radialkolbenpumpen 3,3'befestigt ist, und durch eine nicht gezeichnete elektronische Regeleinheit elektrisch versorgt wird, die auch zur Bestromung und Regelung des Elektromotors sowie ggf. weiterer Bauteile wie insbesondere elektrohydraulische Ventile dient.

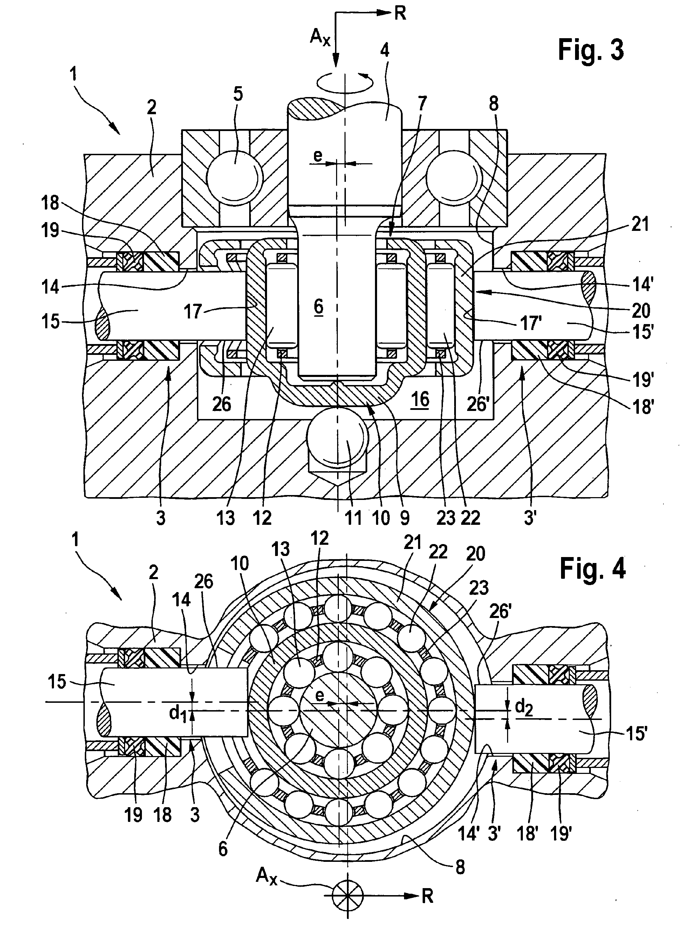

Zur Bildung eines Kurbeltriebs ragt eine Welle 4, die anhand eines Wälzlagers 5 im Gehäuse 2 gelagert ist, mit einem als Exzenter 6 (Exzentrizität e) ausgebildeten Ende sowie mit einem dieses Ende topfförmig umgreifenden Exzenterlager 7, in eine stufenförmige Sackbohrung 8. Ein topfförmiger Außenring 10 des Exzenterlagers 7 verfügt über einen Boden 9, der gegen ein Axialgleitlager in Form einer Kugel 11 anlaufen kann. Weiterhin ist ein Käfig 12 für Wälzkörper 13 vorgesehen, die insbesondere nadelartig ausgebildet, und zwischen Exzenter 6 sowie Außenring 10 platziert sind. Rechtwinklig zur Sackbohrung 8, sowie zueinander diametral gegenüberliegend, münden gestufte Aufnahmebohrungen 14,14' mit Führungen für Kolben 15,15' in einen Kurbelraum 16. Eine gewisse Deaxierung d1,d2 der Aufnahmebohrungen 14,14' entgegen der Drehrichtung (vergleichbar Fig. 4) ist vorteilhaft, auch wenn dies in der Zeichnung nicht immer verdeutlicht ist. Die Kolben 15,15' sitzen mit einem Kolbenboden 17,17' auf dem Außenring 10 des Exzenterlagers 7 auf, und werden durch nicht gezeichnete Kolbenrückstellfedern permanent zur Anlage an den Umfang vom Außenring 10 gedrückt. Weiterhin sind die Kolben 15,15' innerhalb der Aufnahmebohrungen 14,14' anhand von Führungsband 18 und Dichtung 19 (Quadring) abgedichtet geführt angeordnet, und können oszillieren.

Vorstehend wurden Übereinstimmungen mit bekannten Kolbenpumpen referiert, so dass nachfolgend auf neuartige Besonderheiten eingegangen werden kann.

Wie aus den Fig. 1 bis 6 hervorgeht, wird zur Reduktion von Querkraftbeanspruchungen des Kurbeltriebs, insbesondere für den Bereich von Reibzonen der Kolben 15,15' und Kolbenführungen, vorgeschlagen dass zwischen jedem Kolbenboden 17,17' und dem Exzenter 6 zueinander relativ verschiebbare Wälzlagermittel vorgesehen sind. Die Lösung basiert auf einem üblichen Exzenterlager mit Wälzkörpern und einem Außenring 10, auf dessen Umfang nur ein Kolben 15 mit dem Kolbenboden 17 in konventioneller Art und Weise abgestützt ist.

Jeder Kolben 15' weiterer Fördervorrichtungen ist jedoch nicht unmittelbar auf dem Umfang des Außenrings 10 abgestützt. Vielmehr sind gesonderte Wälzlagermittel 20 wie insbesondere Lagerringe, Lagerringsegmente 21, Wälzkörper 22 oder ähnliches mehr zwischengeschaltet, um eine Entkoppelung der Reibkräfte zu erzielen. Die beteiligten Wälzlagermittel 20 sind zu diesem Zweck relativ zueinander sowie zum Exzenterlager 7 verschiebbar beziehungsweise relativ zueinander verdrehbar vorgesehen. Vorzugsweise sind die gesonderten Wälzlagermittel 20 ringsegmentartig vorgesehen, und vergleichbar einem (Roll)Schuh als wälzgelagerter Lagerschuh ausgebildet, der auf einem Außenring 10 des Exzenterlagers 7 abgleiten kann, sowie einen gewissen Umfangsanteil von dem Außenring 10 abdeckt. Dabei sind die zusätzlichen Wälzkörper 22 einschließlich Wälzkörperkäfig 23 zwischen dem Außenumfang des Außenrings 10, und dem Lagerringsegment 21 angeordnet.

Unter Montagegesichtspunkten ist es sinnvoll, wenn das gesamte Exzenterlager 7 samt aller Anbauteile als gebündelte Baueinheit vorgesehen ist, welche als Einheit montierbar ist. Zu diesem Zweck ist es möglich, zusätzliche Lagerringsegmente 21 mit Haltemitteln zu versehen, um diese am Außenring 10 des Exzenterlagers 7 zu sichern. Für diese Bündelung eignet sich vor allem eine Schnapp- oder Clipstechnik, wobei die Form von zwangsläufig erforderlichen Bauteilen oder daran ausgebildeten Haltemitteln, wie insbesondere Haltelaschen, zu Montagezwecken derart elastisch deformiert werden können, dass sie nach einer elastischen Rückverformung eine formschlüssige Sicherung erlauben.

Vorzugsweise sind gesonderte Lagerringe oder Lagerringsegmente 21 (Lagerschuhe) nur begrenzt verdrehbar, wie auch in Radialrichtung R und in Axialrichtung Ax in deren Bewegungsmöglichkeit eingeschränkt, mit anderen Worten gefesselt. Die Fesselung erfolgt entweder in Relation zu dem Gehäuse 2 oder in Relation zu den Kolben 15,15', oder in Relation zum Außenring 10, wobei Lagerringsegmente 21 zusätzliche Anschlagmittel 24 aufweisen können, oder mit diesen Zusammen arbeiten können. Die Anschlagmittel 24 sind vorzugsweise als Nocke 25, Vorsprung oder Ausnehmung ausgebildet. Beispielsweise können die Anschlagmittel 24 gemäß Fig. 1 am Wälzkörperkäfig 23 vorgesehen sein, und an einen Umfang 26,26' der Kolben 15,15' angelegt werden, um in eine Ausnehmung 27 von den Kolben 15,15' einzugreifen, oder an irgendwelchen Gegenflächen von dem Gehäuse 2 oder dem Außenring 10 anzuschlagen.

Bei der Ausführungsform nach Fig. 1 ist das Anschlagmittel nockenförmig ausgebildet, und greift in eine zentrische, axial gerichtete Ausnehmung 27 von einem Kolben 15'.

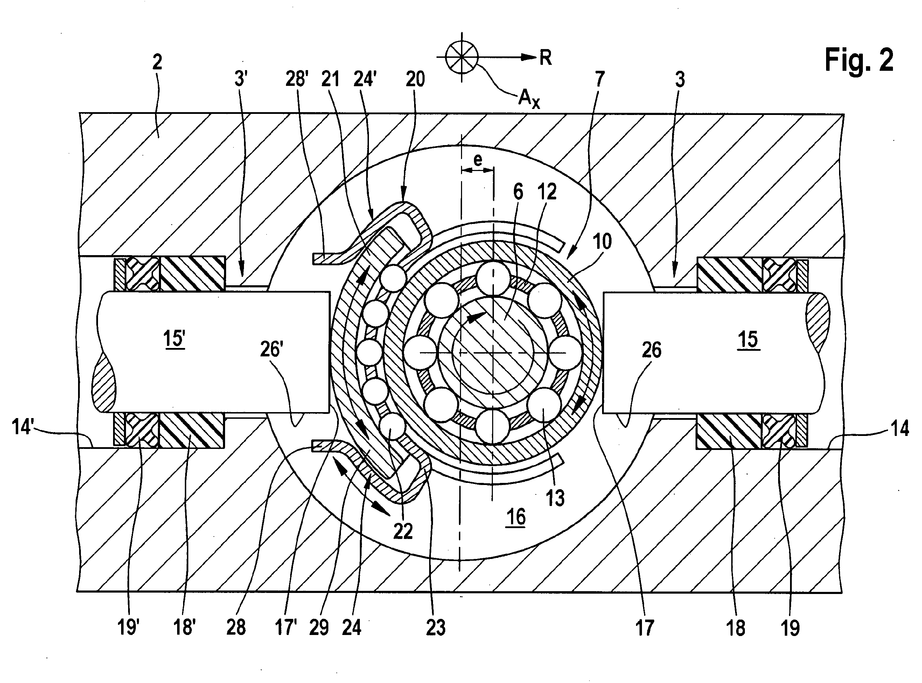

Bei der Ausführungsform nach Fig. 2 ist ein zusätzlicher Wälzkörperkäfig 23 aus dünnem Blechwerkstoff in Stanz-, Tiefzieh- und Biegeherstellverfahren, also spanlos mit Ausnehmungen zur Aufnahme von zusätzlichen Wälzkörpern 22 wie insbesondere Nadeln oder Kugeln vorgesehen. Der Wälzkörperkäfig 23 weist zwecks Selbstausrichtung und Drehwinkelbeschränkung zwei seitlich umgeklappte Laschen 28,28' auf, deren Enden als Anschlagmittel 24 zur Anlage an einem Umfang 26,26' von einem Kolben 15,15' dienen können. Die Laschen 28,28' übergreifen ferner eine, zwischen Kolbenboden 17' und zusätzlichen Wälzkörpern 22 angeordnetem Lagerringsegment (Druckplatte 29). Im übrigen ist der Wälzkörperkäfig 23 ringförmig geschlitzt ausgebildet, und umgreift den Außenring 10 des Exzenterlagers 7 zwecks Ausbildung einer gebündelten Baueinheit. Dabei kann der Wälzkörperkäfig 23 gewissermaßen auf den Außenring 10 aufgeclipst werden.

Die Ausführungsform gemäß Fig. 3 und 4 unterscheidet sich von den Fig. 1 und 2, indem der Wälzkörperkäfig 23 ohne umgeklappte Laschen ausgebildet ist. Statt dessen ist der Wälzkörperkäfig 23 in einem Lagerringsegment 21 aufgenommen, welches ringförmig aber geschlitzt ausgebildet ist. Dies hat den Vorteil, dass als Herstellungsgrundlage zwei im wesentlichen standardisierte, radial ineinander verschachtelte, Wälzlager - insbesondere Nadellager - beigezogen werden können, wobei ein radial inneres Wälzlager mit Wälzkörpern unmittelbar auf dem Exzenter 6 läuft, und einen Außenring 10 mit Doppelfunktion aufweist, weil weil dessen Außenwandung gleichzeitig als Lauffläche für das radial äußere Wälzlager mit dem Lagerringsegement 21 dient. Durch den besagten Schlitz oder Durchbruch tritt der Kolben 15 zwecks unmittelbarer Abstützung auf dem Außenring 10, während der andere Kolben 15' auf dem Lagerringsegement 21 abgestützt ist. In weiterem Unterschied zur Fig. 2 ist diese Bauform auf Zweikolbenpumpen beschränkt, oder es müssen Abstriche bei der Kraftentkoppelung in Kauf genommen werden.

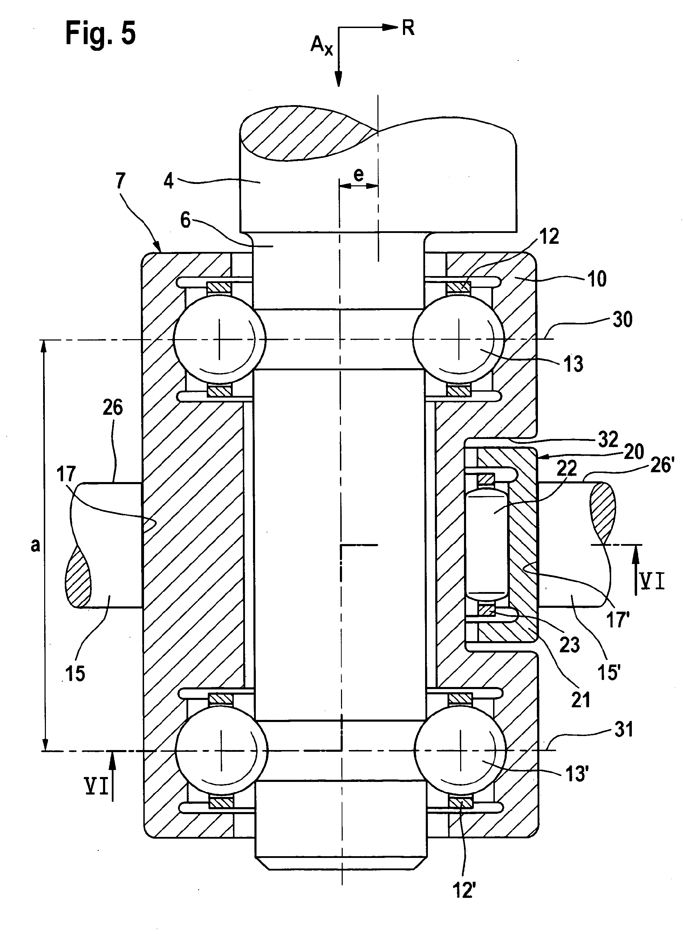

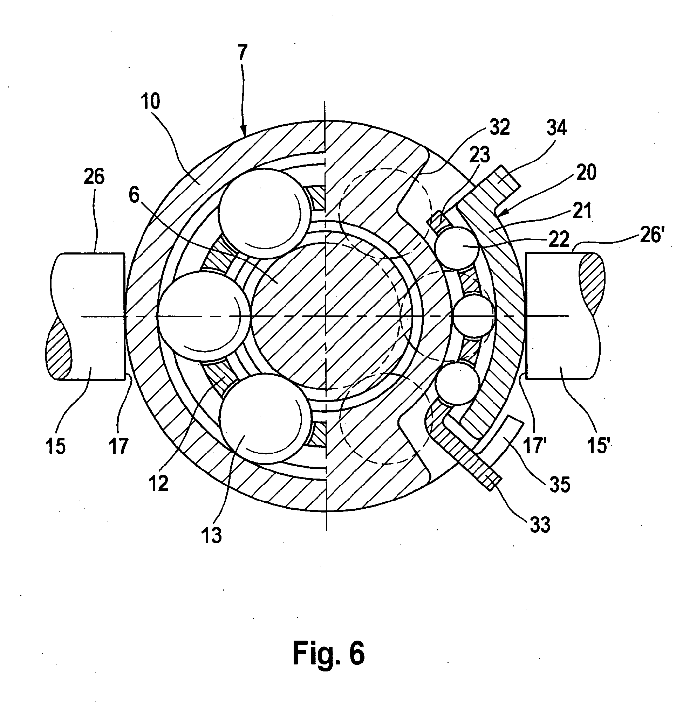

Die Ausführungsform nach den Fig. 5 und 6 ermöglicht eine durchmesserreduzierte Bauform einer reibkraftentkoppelten Sonderlagerung, weil Wälzkreise der Wälzkörperreihen 30,31 nicht wie bei den vorstehenden Varianten - zueinander fluchtend, und in einer gemeinsamen Ebene gemeinsam mit den Achsen der Kolben - angeordnet sind, sondern in Axialrichtung gestreckt, sowie auf unterschiedliche Axialebenen verteilt sind. Dieser Zusammenhang ist insbesondere der Fig. 5 deutlich entnehmbar. Ein weiterer Vorteil besteht darin, dass die Kolben 15,15' - wie bei konventionellen Radialkolbenpumpen für Fahrzeugbremsanlagen bis auf deren Deaxierung d1,d2 (soweit vorhanden) - symmetrisch zum Kurbelraum 16 angeordnet sind, wodurch die Verbohrung von dem Gehäuse 2 nur geringfügig zu überarbeiten ist. Folglich können vorhandene Fertigungseinrichtungen im wesentlichen weiterverwendet werden.

Wie der Schnittverlauf entlang der Linie VI-VI verdeutlicht, ist das Exzenterlager 7 zweireihig, vorzugsweise mit kugelförmigen Wälzkörpern, zumindest jedoch mit voneinander im Abstand a angeordneten Wälzkörperreihen 30,31 ausgebildet. Etwa mittig zwischen den beiden Wälzkörperreihen 30,31 weist ein prinzipiell zylindrischer, jedoch asymmetrischer Außenring 10 eine Ausnehmung 32 zur Aufnahme eines gesonderten Lagerringsegmentes 21 auf. Das radiale Außenmaß von dem Lagerringsegment 21 ist deckungsgleich mit dem Umfang des Außenrings 10 gestaltet. Zur axialen und radialen Fesselung verfügt die Ausnehmung 32 über integrierte Anschlagflächen für das Lagerringsegment 21. Dabei skizziert Fig. 6 zwei unterschiedliche Varianten der Fesselung anhand unterschiedlich abgekröpfter Laschen 33,34. Ein Wälzkörperkäfig 23 kann zu diesem Zweck - gemäß einer Ausführungsform unterhalb einer waagerechten Symmetrieachse in Fig. 6 - mit einer im wesentlichen rechtwinklig abgekröpften Lasche 33 versehen sein, welcher eine Drehbewegung des Lagerringsegementes 21(Druckplatte 29) limitiert. Ein vorzugsweise schenkelförmig ausgebildetes Haltemittel 35 des Wälzkörperkäfigs 23 kann das Lagerringssegment 21 zur Bildung einer Baueinheit fixieren. Bei der anderen Variante - gemäß einer Ausführungsform oberhalb der waagerechten Symmetrieachse in Fig. 6 - kann das Lagerringsegment 21 mit einer im wesentlichen rechtwinklig abgekröpften Lasche 34 versehen sein, welche gegen eine Anschlagfläche des Außenrings 10 anlegbar ist. Dabei begrenzt die Anschlagfläche die Ausnehmung 32 von dem Außenring 10.

Obwohl dies in den Figuren nicht verdeutlicht ist, kann jedem zusätzlichen Wälzlagermittel 20, Lagerringsegment 21, Druckplatte 29, Wälzkörperkäfig 23 ein elastisches Mittel zugeordnet sein, um das entsprechende Wälzlagermittel 20 relativ zu Kolben 15,15', Gehäuse 2 oder Außenring 10 elastisch nachgiebig sowie vibrationsgesichert (klapperfrei) in einer neutralen Lage zu fixieren.

Obwohl die Erläuterung anhand der Zeichnung ausschließlich am Beispiel von Zweikolbenpumpen für elektronisch geregelte Fahrzeugbremsanlagen erfolgt, ist die Erfindung - soweit nicht besonders vermerkt - prinzipiell für jegliche Art von Mehrkolbenpumpen adaptierbar, und insbesondere auch für Dreikolbenpumpen geeignet.

### Bezugszeichenliste

- 1: Aggregat
- 2: Gehäuse
- 3,3': Radialkolbenpumpe
- 4: Welle
- 5: Wälzlager
- 6: Exzenter
- 7: Exzenterlager
- 8: Sackbohrung
- 9: Boden
- 10: Außenring
- 11: Kugel
- 12: Käfig
- 13: Wälzkörper
- 14: Aufnahmebohrung
- 15: Kolben
- 16: Kurbelraum
- 17: Kolbenboden
- 18: Führungsband
- 19: Dichtung
- 20: Wälzlagermittel
- 21: Lagerringsegement
- 22: Wälzkörper
- 23: Wälzkörperkäfig
- 24: Anschlagmittel
- 25: Nocken
- 26: Umfang
- 27: Ausnehmung
- 28: Lasche
- 29: Druckplatte
- 30: Wälzkörperreihe
- 31: Wälzkörperreihe
- 32: Ausnehmung
- 33: Lasche
- 34: Lasche
- 35: Haltemittel

- a: Abstand
- d1, d2: Deaxierung
- e: Exzentrizität
- Ax: Axialrichtung
- R: Radialrichtung

## Patentansprüche

1. Radialkolbenpumpe, umfassend einen Kurbeltrieb mit mehreren, wälzgelagert, über jeweils einen Kolbenboden (17,17') auf einem, zentral und drehbar gelagert angeordneten, Exzenter (6) abgestützten Kolben (15,15'), welche oszillatorisch verschiebbar in einem Gehäuse (2) geführt vorgesehen sind, wobei zwischen jedem Kolbenboden (17,17') und dem Exzenter (6) zueinander relativ verschiebbare Wälzlagermittel vorgesehen sind, um den Kurbeltrieb von Querkräften zu entlasten, **dadurch gekennzeichnet, dass** sich ein Kolben (15) mit seinem Kolbenboden (17) auf einem Aussenring (10) abstützt, dass sichalle übrigen Kolben (15') mit ihren Kolbenböden (17') auf gesonderten Wälzlagermitteln (20) abstützen, und dass jedes gesonderte Wälzlagermittel (20) mehrere Wälzkörper (22) und ein Lagerringsegment (21) umfasst, welches den Außenring (10) zumindest teilweise umgreift, wobei die Wälzkörper (22) zwischen Außenring (10) und Lagerringsegment (21) angeordnet sind

2. Radialkolbenpumpe nach Anspruch 1, **dadurch gekennzeichnet, dass** die übrigen Kolben (15') mit ihren Kolbenböden (17') auf Lagerringsegmenten (21) abgestützt sind.

3. Radialkolbenpumpe nach Anspruch 2, **dadurch gekennzeichnet, dass** wenigstens ein Lagerringsegment (21) relativ zu dem Gehäuse (2) begrenzt verdrehbar ist, und dass das Lagerringsegment (21) Anschlagmittel (24) aufweist.

4. Radialkolbenpumpe nach Anspruch 3, **dadurch gekennzeichnet, dass** das oder die Anschlagmittel (24) am Kolben (15,15'), insbesondere am Umfang (26) angreifen.

5. Radialkolbenpumpe nach Anspruch 3, **dadurch gekennzeichnet, dass** das oder die Anschlagmittel (24) als Vorsprung, als Nocke (25), oder als Ausnehmung (27) am Lagerringsegment (21) ausgebildet sind.

6. Radialkolbenpumpe nach einem oder mehreren der vorhergehenden Ansprüche, **dadurch gekennzeichnet, dass** wenigstens ein elastisches Mittel vorgesehen sind, um ein Wälzlagermittel (20) elastisch nachgiebig in einer neutralen Position zu fixieren.

7. Radialkolbenpumpe nach Anspruch 1, **dadurch gekennzeichnet, dass** der Außenring (10) eine Ausnehmung (27) aufweist, in der das Lagerringsegment (21) angeordnet ist.

8. Radialkolbenpumpe nach Anspruch 7, **dadurch gekennzeichnet, dass** der Kurbeltrieb eine Exzenterlagerbaueinheit aufweist, welche zur Anordnung auf einem Exzenter (6) vorgesehen ist, wobei ein Außenring (10) ein zweireihiges Wälzlager aufnimmt, wobei der Außenring (10) asymmetrisch ausgebildet ist, und wobei in Axialrichtung mittig zwischen den Wälzkörperreihen das gesonderte Lagerringsegment (21) vorgesehen ist.

## Claims

1. Radial piston pump, comprising a crank mechanism with a plurality of pistons (15, 15') which are rolling-bearing-mounted and are supported in each case via a piston head (17, 17') on an eccentric (6) arranged centrally and so as to be rotatably mounted and which are provided so as to be guided in an oscillatory manner displaceably in a housing (2), rolling-bearing means displaceable in relation to one another being provided between each piston head (17, 17') and the eccentric (6), in order to relieve the crank mechanism of transverse forces, **characterized in that** one piston (15) is supported with its piston head (17) on an outer ring (10), **in that** all the other pistons (15') are supported with their piston heads (17') on separate rolling-bearing means (20), and **in that** each separate rolling-bearing means (20) comprises a plurality of rolling bodies (22) and a bearing-ring segment (21) which at least partially surrounds the outer ring (10), the rolling bodies (22) being arranged between the outer ring (10) and bearing-ring segment (21).

2. Radial piston pump according to Claim 1, **characterized in that** the other pistons (15') are supported with their piston heads (17') on bearing-ring segments (21).

3. Radial piston pump according to Claim 2, **characterized in that** at least one bearing-ring segment (21) is rotatable to a limited extent in relation to the housing (2), and **in that** the bearing-ring segment (21) has stop means (24).

4. Radial piston pump according to Claim 3, **characterized in that** the stop means (24) engages or engage on the piston (15, 15'), in particular on the circumference (26).

5. Radial piston pump according to Claim 3, **characterized in that** the stop means (24) is or are designed as a projection, as a boss (25) or as a recess (27) on the bearing-ring segment (21).

6. Radial piston pump according to one or more of the preceding claims, **characterized in that** at least one elastic means is provided in order to fix a rolling-bearing means (20) in a neutral position in an elastically resilient manner.

7. Radial piston pump according to Claim 1, **characterized in that** the outer ring (10) has a recess (27) in which the bearing-ring segment (21) is arranged.

8. Radial piston pump according to Claim 7, **characterized in that** the crank mechanism has an eccentric bearing structural unit which is provided for arrangement on an eccentric (6), an outer ring (10) receiving a double-row rolling bearing, the outer ring (10) being designed asymmetrically, and the separate bearing-ring segment (21) being provided centrally in the axial direction between the rolling-body rows.

## Revendications

1. Pompe à pistons radiaux, comprenant un entraînement à vilebrequin avec plusieurs pistons (15, 15') montés sur paliers à roulement, supportés à chaque fois par le biais d'un fond de piston (17, 17') sur un excentrique (6) disposé de manière supportée centralement et à rotation, qui sont prévus dans un boîtier (2) de manière guidée par coulissement et mouvement oscillatoire, des moyens de paliers à roulement coulissables l'un par rapport à l'autre étant prévus entre chaque fond de piston (17, 17') et l'excentrique (6), afin de décharger l'entraînement à vilebrequin de forces transversales, **caractérisée en ce qu'**un piston (15) s'appuie avec son fond de piston (17) sur une bague extérieure (10), **en ce que** tous les autres pistons (15') s'appuient avec leurs fonds de piston (17') sur des moyens de paliers à roulement séparés (20), et **en ce que** chaque moyen de palier à roulement séparé (20) comprend plusieurs corps de roulement (22) et un segment annulaire de palier (21), qui vient en prise au moins en partie autour de la bague extérieure (10), les corps de roulement (22) étant disposés entre la bague extérieure (10) et le segment annulaire de palier (21).

2. Pompe à pistons radiaux selon la revendication 1, **caractérisée en ce que** les autres pistons (15') avec leurs fonds de piston (17') sont supportés sur des segments annulaires de palier (21).

3. Pompe à pistons radiaux selon la revendication 2, **caractérisée en ce qu'**au moins un segment annulaire de palier (21) peut tourner de manière limitée par rapport au boîtier (2), et **en ce que** le segment annulaire de palier (21) présente des moyens de butée (24).

4. Pompe à pistons radiaux selon la revendication 3, **caractérisée en ce que** le ou les moyens de butée (24) viennent en prise sur le piston (15, 15'), en particulier sur la circonférence (26).

5. Pompe à pistons radiaux selon la revendication 3, **caractérisée en ce que** le ou les moyens de butée (24) sont réalisés sous forme de saillie, de came (25), ou sous forme d'évidement (27) sur le segment annulaire de palier (21).

6. Pompe à pistons radiaux selon l'une quelconque ou plusieurs des revendications précédentes, **caractérisée en ce qu'**au moins un moyen élastique est prévu pour fixer un moyen de palier à roulement (20) de manière flexible élastique dans une position neutre.

7. Pompe à pistons radiaux selon la revendication 1, **caractérisée en ce que** la bague extérieure (10) présente un évidement (27), dans lequel le segment annulaire de palier (21) est disposé.

8. Pompe à pistons radiaux selon la revendication 7, **caractérisée en ce que** l'entraînement à vilebrequin présente une unité constructive de palier à excentrique, qui est prévue pour être disposée sur un excentrique (6), une bague extérieure (10) recevant un palier à roulement à deux rangées, la bague extérieure (10) étant réalisée de manière asymétrique, et le segment annulaire de palier séparé (21) étant prévu dans la direction axiale centralement entre les rangées de corps de roulement.
